# EUROPEAN PATENT APPLICATION

(11) **EP 3 890 048 A1**
(43) Date of publication of application: **06.10.2021**
(21) Application number: 19889877.7
(22) Date of filing: 27.09.2019
(51) Int. Cl.: H01M 2/10, H01M 10/613, H01M 10/647, H01M 10/653, H01M 10/6554

(54) **BATTERY MODULE**

(30) Priority: 28.11.2018 JP 2018222204
(71) Applicant: SANYO Electric Co., Ltd., Daito-shi Osaka 574-8534 (JP)
(72) Inventor: EGASHIRA Takuya, Osaka-shi, Osaka 540-6207 (JP); TAKATA Hiroshi, Osaka-shi, Osaka 540-6207 (JP)
(74) Representative: Vigand, Philippe
(86) International application number: PCT/JP2019/038297
(87) International publication number: WO 2020/110447

(57) **Abstract**

In order to simplify a structure of a battery module, battery module (1) includes battery stack (2) having a plurality of batteries (14) that is stacked, cooling plate (6) thermally connected to battery stack (2), and restraint member (12) that sandwiches the plurality of batteries (14) in stacking direction (X) of batteries (14) and sandwiches battery stack (2) and cooling plate (6) in arrangement direction (Z) of battery stack (2) and cooling plate (6).

## Description

### TECHNICAL FIELD

The present invention relates to a battery module.

### BACKGROUND ART

As a power source that requires a high output voltage, used for a vehicle, for example, a battery module is known in which a plurality of batteries is electrically connected. Regarding such a battery module, PTL 1 discloses a battery stack having a plurality of stacked batteries, a pair of end plates disposed at both ends of the battery stack in a stacking direction of the batteries, a binding bar interposed between the pair of end plates and restraining the plurality of batteries in the stacking direction, and a cooling plate connected to a bottom surface of the battery stack.

### Citation List

### Patent Literature

PTL1: International Publication No. 2016/174855

### SUMMARY OF THE INVENTION

### Technical problem

In the conventional battery module, the cooling plate is screwed to the battery stack. As a result of intensive research on the conventional battery module, the inventors found that the conventional battery module could have been structured more simply.

The present invention has been made in view of such circumstances, and an object of the present invention is to provide a technique for simplifying a structure of a battery module.

### Solution to problem

One aspect of the present invention is a battery module. This battery module includes s battery stack having a plurality of batteries that is stacked, a cooling plate thermally connected to the battery stack, and a restraint member sandwiching the plurality of batteries in a stacking direction of the batteries and sandwiching the battery stack and the cooling plate in an arrangement direction of the battery stack and the cooling plate.

Note that any combination of the above components and a conversion of an expression of the present invention between methods, devices, systems, and the like are also effective as an aspect of the present invention.

### Advantageous effect of invention

The present invention can simplify the structure of the battery module.

### BRIEF DESCRIPTION OF DRAWINGS

FIG. 1 is a perspective view of a battery module according to a first exemplary embodiment.
FIG. 2 is an exploded perspective view of the battery module.
FIG. 3(A) is an enlarged cross-sectional view of an upper part of the battery module. FIG. 3(B) is an enlarged cross-sectional view of a bottom of the battery module.
FIG. 4 is an enlarged perspective view of the bottom of the battery module.
FIG. 5 is an enlarged perspective view of a bottom of the battery module according to a second exemplary embodiment.

### DESCRIPTION OF EMBODIMENTS

Hereinafter, the present invention will be described with reference to the drawings on the basis of preferred exemplary embodiments. The exemplary embodiments do not limit the invention, but are exemplary, and all the characteristics and combinations thereof described in the exemplary embodiments are not necessarily essential to the invention. The same or equivalent components, members, and processes shown in the drawings shall be designated by the same reference numerals, and redundant description will be omitted as appropriate. The scale and shape of each part shown in the drawings are set for convenience in order to facilitate explanation, and are not interpreted in a limited manner unless otherwise specified. Terms such as "first" and "second", used in the specification or claims, do not represent any order or importance unless otherwise specified, but are used to distinguish one configuration from another configuration. Some of the members that are unimportant for explaining the exemplary embodiments in the drawings are omitted.

### (First exemplary embodiment)

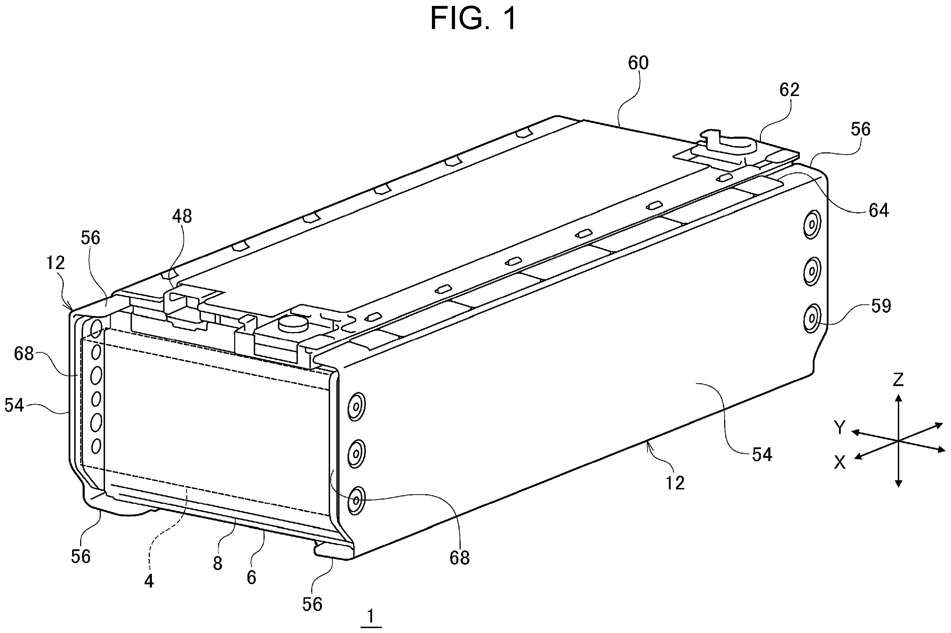

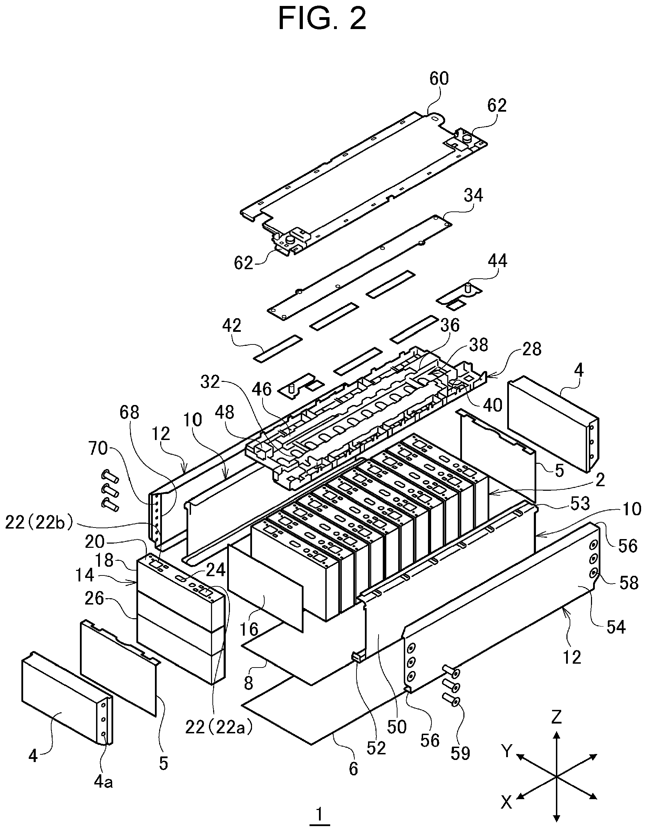

FIG. 1 is a perspective view of a battery module according to a first exemplary embodiment. FIG. 2 is an exploded perspective view of the battery module. Battery module 1 includes battery stack 2, a pair of end plates 4, cooling plate 6, heat conductive layer 8, side separator 10, and restraint member 12.

Battery stack 2 has a plurality of batteries 14 and intercell separator 16. Each of the plurality of batteries 14 is a rechargeable secondary battery such as a lithium ion battery, a nickel-hydrogen battery, or a nickel-cadmium battery. Each battery 14 is a so-called square battery, and has outer can 18 having a flat rectangular parallelepiped shape. A substantially rectangular opening (not shown) is provided on one surface of outer can 18, and an electrode body, an electrolytic solution, or the like is housed in outer can 18 through this opening. The opening of outer can 18 is provided with sealing plate 20 that seals outer can 18.

Sealing plate 20 is provided with positive electrode output terminal 22 near one end in a longitudinal direction and negative electrode output terminal 22 near the other end in the longitudinal direction. A pair of output terminals 22 is electrically connected to a positive electrode plate and a negative electrode plate configuring the electrode body, respectively. Hereinafter, positive electrode output terminal 22 will be referred to as positive electrode terminal 22a, and negative electrode output terminal 22 will be referred to as negative electrode terminal 22b. When there is no need to distinguish a polarity of output terminals 22, positive electrode terminal 22a and negative electrode terminal 22b are collectively referred to as output terminals 22. Outer can 18, sealing plate 20, and output terminal 22 are conductors, for example, including metal. Sealing plate 20 and the opening of outer can 18 are joined by welding or the like. Each of the pair of output terminals 22 is inserted into a through hole (not shown) formed in sealing plate 20. An insulating sealing member (not shown) is interposed between the pair of output terminals 22 and each through hole.

In the present exemplary embodiment, for convenience of explanation, a surface of outer can 18 on which sealing plate 20 is provided is an upper surface of each battery 14, and a surface facing an upper surface of outer can 18 is a bottom surface of each battery 14. Further, each battery 14 has two main surfaces connecting the upper surface and the bottom surface. These main surfaces are the surfaces having the largest area among the six surfaces of each battery 14. Further, the main surfaces are long side surfaces connected to long sides of the upper surface and the bottom surface. The remaining two surfaces excluding the upper surface, bottom surface, and two main surfaces are side surfaces of each battery 14. These side surfaces are short side surfaces connected to short sides of the upper surface and the bottom surface.

Further, for convenience of explanation, in battery stack 2, a surface on the upper surface side of each battery 14 is an upper surface of battery stack 2, a surface on the bottom surface side of each battery 14 is a bottom surface of battery stack 2, and surfaces on the short side surfaces side of each battery 14 are side surfaces of battery stack 2. Further, the upper surface side of battery stack 2 is upward in a vertical direction, and the bottom surface side of battery stack 2 is downward in a vertical direction. However, these directions and positions are specified for convenience. Therefore, for example, the part defined as the upper surface in the present invention is not meant to be always above the part defined as the bottom surface.

Sealing plate 20 is provided with valve 24 between the pair of output terminals 22. Valve 24, also called a safety valve, is a mechanism for discharging gas inside each battery 14. Valve 24 is configured to open when an internal pressure of outer can 18 rises to or above a predetermined value to release gas inside outer can 18. Valve 24 includes, for example, a thin-walled part that is provided at a part of sealing plate 20 and thinner than the other parts, and a linear groove formed on a surface of the thin-walled part. In this configuration, when the internal pressure of outer can 18 rises, the thin-walled part is torn from the groove to open the valve. Valve 24 of each battery 14 is connected to exhaust duct 38, which will be described later, and the gas inside each battery is discharged from valve 24 to exhaust duct 38.

Further, each battery 14 has insulating film 26. Insulating film 26 is, for example, a tubular shrink tube, and is heated after outer can 18 is passed through inside. As a result, insulating film 26 shrinks and covers two main surfaces and two side surfaces of outer can 18. Insulating film 26 can suppress a short circuit between adjacent batteries 14 or between batteries 14 and end plates 4.

The plurality of batteries 14 is stacked at predetermined intervals such that the main surfaces of adjacent batteries 14 face each other. Note that "stacking" means arranging a plurality of members in any one direction. Thus, stacking batteries 14 also includes horizontally arranging the plurality of batteries 14. Further, each battery 14 is disposed such that output terminals 22 face the same direction. In the present exemplary embodiment, for convenience, each battery 14 is disposed such that output terminals 22 face upward in the vertical direction. Two adjacent batteries 14 are stacked such that positive electrode terminal 22a of one battery 14 and negative electrode terminal 22b of the other battery 14 are adjacent to each other.

Each intercell separator 16 is also called an insulating spacer, and includes, for example, an insulating resin sheet. Examples of the resin configuring intercell separators 16 include thermoplastic resins such as polypropylene (PP), polybutylene terephthalate (PBT), polycarbonate (PC), and Noryl (registered trademark) resin (modified-PPE). Each intercell separator 16 is disposed between two adjacent batteries 14 and electrically insulates between two batteries 14.

Battery stack 2 is interposed between the pair of end plates 4. The pair of end plates 4 is disposed at both ends of battery stack 2 in stacking direction X of batteries 14. The pair of end plates 4 is adjacent to batteries 14 located at both ends in stacking direction X via outer end separators 5. Outer end separators 5 can include the same resin material as intercell separators 16. Each end plate 4 is a metal plate including a metal such as iron, stainless steel, or aluminum. Outer end separators 5 are interposed between end plates 4 and batteries 14, and thus both are insulated.

Each end plate 4 has fastening holes 4a on two surfaces facing in direction Y orthogonal to stacking direction X of batteries 14, that is, in a direction in which the pair of output terminals 22 is arranged. In the present exemplary embodiment, three fastening holes 4a are disposed at predetermined intervals in arrangement direction Z of battery stack 2 and cooling plate 6. Each of the surfaces on which fastening holes 4a are provided is a surface facing flat surface 54 of restraint member 12.

Bus bar plate 28 is placed on the upper surface of battery stack 2. Bus bar plate 28 is a plate-shaped member that covers the surface of the plurality of batteries 14 provided with output terminals 22. Bus bar plate 28 has a plurality of openings 32 that expose valves 24 at positions corresponding to valves 24 of batteries 14. Further, bus bar plate 28 has duct top plate 34 that covers an upper part of openings 32, and side wall 36 that surrounds a side of openings 32. Duct top plate 34 is fixed to an upper end of side wall 36 to form exhaust duct 38 on bus bar plate 28. Each valve 24 communicates with exhaust duct 38 via openings 32.

Further, bus bar plate 28 has openings 40 for exposing output terminals 22 at positions corresponding to output terminals 22 of each battery 14. Bus bars 42 are placed on openings 40. The plurality of bus bars 42 is supported by bus bar plate 28. Bus bars 42 placed on openings 40 electrically connect positive electrode terminals 22a and negative electrode terminals 22b of adjacent batteries 14.

Each bus bars 42 is a substantially strip-shaped member including a metal such as copper or aluminum. Each bus bar 42 has one end connected to positive electrode terminal 22a of one battery 14, and the other end connected to negative electrode terminal 22b of the other battery 14. Each bus bar 42 may connect output terminals 22 having the same polarity in the plurality of adjacent batteries 14 in parallel to form a battery block, and may further connect battery blocks in series.

Bus bar 42 connected to output terminals 22 of batteries 14 located at both ends in stacking direction X has external connection terminal 44. External connection terminal 44 is electrically connected to terminal 62 of top cover 60, which will be described later. External connection terminal 44 is connected to an external load (not shown) via terminal 62. Further, voltage detection line 46 is placed on bus bar plate 28. Voltage detection line 46 is electrically connected to the plurality of batteries 14 to detect a voltage of each battery 14. Voltage detection line 46 has a plurality of lead wires (not shown). One end of each lead wire is connected to each bus bar 42, and the other end of each lead wire is connected to connector 48. Connector 48 is connected to external battery ECU (not shown) or the like. Battery ECU controls detection of a voltage of each battery 14 and charging and discharging of each battery 14.

Cooling plate 6 includes a material having high heat conductivity, such as aluminum. Cooling plate 6 is thermally connected to battery stack 2, that is, cooling plate 6 is connected to battery stack 2 so as to be able to exchange heat and cools each battery 14. In the present exemplary embodiment, battery stack 2 is placed on a main surface of cooling plate 6. Battery stack 2 is placed on cooling plate 6 such that the bottom surface faces toward cooling plate 6. Cooling plate 6 may have a flow path inside through which a refrigerant such as water or ethylene glycol flows. As a result, cooling efficiency of batteries 14 can be further improved.

Heat conductive layer 8 having insulation properties is interposed between battery stack 2 and cooling plate 6. That is, cooling plate 6 is thermally connected to battery stack 2 via heat conductive layer 8. Heat conductive layer 8 according to the present exemplary embodiment covers the entire bottom surface of battery stack 2. Heat conductive layer 8 has higher heat conductivity than air. Heat conductive layer 8 can include a known resin sheet having good heat conductivity, such as an acrylic rubber sheet or a silicone rubber sheet.

Heat conductive layer 8, which is interposed between battery stack 2 and cooling plate 6, allows improvement in the cooling efficiency of each battery 14 and more uniform cooling of each battery 14. Further, heat conductive layer 8, which has insulation properties, can prevent battery stack 2 and cooling plate 6 from being electrically connected to each other via heat conductive layer 8. Further, heat conductive layer 8 suppresses displacement between battery stack 2 and cooling plate 6 in directions perpendicular to arrangement direction Z of battery stack 2 and cooling plate 6 (that is, extending directions of XY plane).

Side separator 10 is a long member elongated in stacking direction X of batteries 14. In the present exemplary embodiment, a pair of side separators 10 is arranged in direction Y orthogonal to stacking direction X of batteries 14. Side separators 10 include, for example, an insulating resin. Examples of the resin configuring side separators 10 include thermoplastic resins such as polypropylene (PP), polybutylene terephthalate (PBT), polycarbonate (PC), and Noryl (registered trademark) resin (modified-PPE), similarly to intercell separators 16.

Battery stack 2, the pair of end plates 4, cooling plate 6, and heat conductive layer 8 are disposed between the pair of side separators 10. Each side separator 10 has first part 50, second part 52, and third part 53. First part 50 has a rectangular shape and extends in stacking direction X of batteries 14 along the side surface of battery stack 2. Second part 52 has a strip shape extending in stacking direction X, and protrudes from a lower side of first part 50 toward battery stack 2. Third part 53 has a strip shape extending in stacking direction X, and protrudes from an upper side of first part 50 toward battery stack 2.

Restraint member 12, also called a binding bar, is a long member elongated in stacking direction X of batteries 14. In the present exemplary embodiment, a pair of restraint members 12 is arranged in direction Y orthogonal to stacking direction X of batteries 14. Restraint members 12 include a metal such as iron or stainless steel. Battery stack 2, the pair of end plates 4, cooling plate 6, heat conductive layer 8, and the pair of side separators 10 are arranged between the pair of restraint members 12.

Each restraint member 12 has flat surface 54 and a pair of arms 56. Flat surface 54 has a rectangular shape and extends in stacking direction X along the side surface of battery stack 2. The pair of arms 56 protrudes from an end of flat surface 54 toward battery stack 2, and face each other in arrangement direction Z of battery stack 2 and cooling plate 6. That is, one arm 56 of the pair of arms 56 protrudes from an upper side of flat surface 54 toward battery stack 2, and other arm 56 of the pair of arms 56 protrudes from a lower side of flat surface 54 toward battery stack 2. Battery stack 2, cooling plate 6, heat conductive layer 8, and the pair of side separators 10 are arranged between the pair of arms 56.

Contact plate 68 is fixed to a region of flat surface 54 facing each end plate 4 by welding or the like. Contact plate 68 is a member elongated in arrangement direction Z. Contact plate 68 is provided with through holes 70 that penetrate contact plate 68 in direction Y at positions corresponding to fastening holes 4a of end plate 4. Further, flat surface 54 has through holes 58 penetrating flat surface 54 in direction Y at positions corresponding to through holes 70 of contact plate 68.

The pair of end plates 4, which is engaged with flat surface 54 of each restraint member 12, restrains the plurality of batteries 14 in stacking direction X. Specifically, the plurality of batteries 14 and the plurality of intercell separators 16 are alternately arranged to form battery stack 2, and battery stack 2 is interposed between the pair of end plates 4 via outer end separators 5 in direction X. Further, heat conductive layer 8 is disposed on the bottom surface of battery stack 2, and cooling plate 6 is disposed so as to face battery stack 2 across heat conductive layer 8. In this state, battery stack 2, the pair of end plates 4, cooling plate 6, and heat conductive layer 8 are interposed between the pair of side separators 10 in direction Y. Further, the pair of restraint members 12 sandwich the pair of side separators 10 as a whole from outside in direction Y.

The pair of end plates 4 and the pair of restraint members 12 are aligned with each other such that fastening holes 4a, through holes 70, and through holes 58 overlap each other. Then, fastening members 59 such as screws are inserted into through holes 58 and through holes 70 and screwed into fastening holes 4a. As a result, the pair of end plates 4 and the pair of restraint members 12 are fixed to each other. The pair of end plates 4 and the pair of restraint members 12 are engaged with each other, and thus the plurality of batteries 14 is fastened and restrained in stacking direction X. Thus, batteries 14 are positioned in stacking direction X. Further, the upper surface and the bottom surface of the plurality of batteries 14 are interposed between two arms 56 facing each other in arrangement direction Z. As a result, the plurality of batteries 14 is positioned in arrangement direction Z.

For example, after these positionings are completed, bus bar plate 28 is placed on battery stack 2. Then, bus bar 42 is attached to output terminals 22 of each battery 14, and output terminals 22 of the plurality of batteries 14 are electrically connected to each other. For example, bus bar 42 is fixed to output terminals 22 by welding.

Top cover 60 is stacked on an upper surface of bus bar plate 28. Top cover 60 suppresses contact of condensed water, dust, and the like with output terminals 22, valve 24, bus bar 42, and the like of each battery 14. Top cover 60 includes, for example, an insulating resin. Top cover 60 has terminal 62 at a position overlapping external connection terminal 44 in arrangement direction Z. Top cover 60 is fixed to bus bar plate 28 by, for example, a snap fit. With top cover 60 mounted on bus bar plate 28, external connection terminal 44 and terminal 62 are connected.

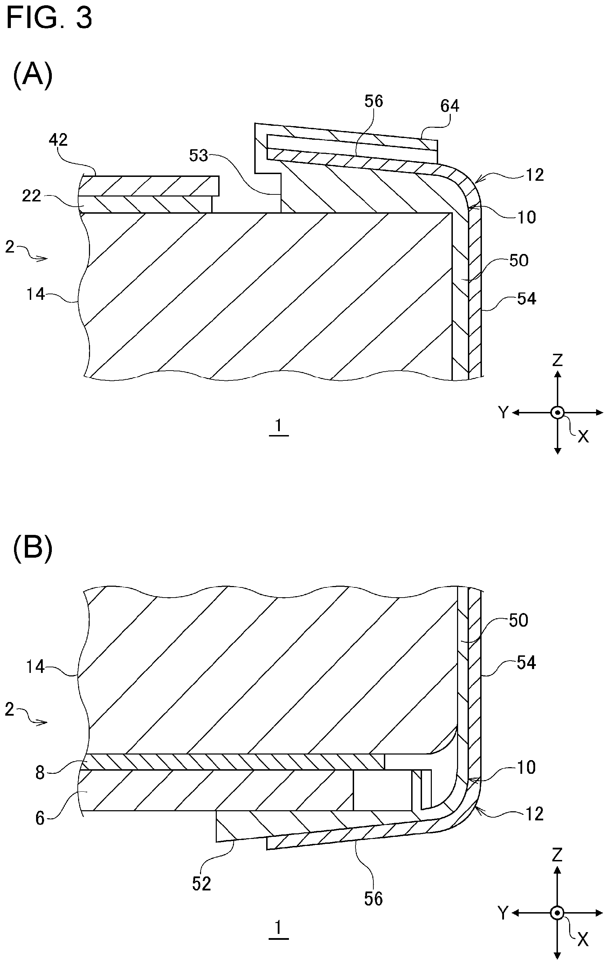

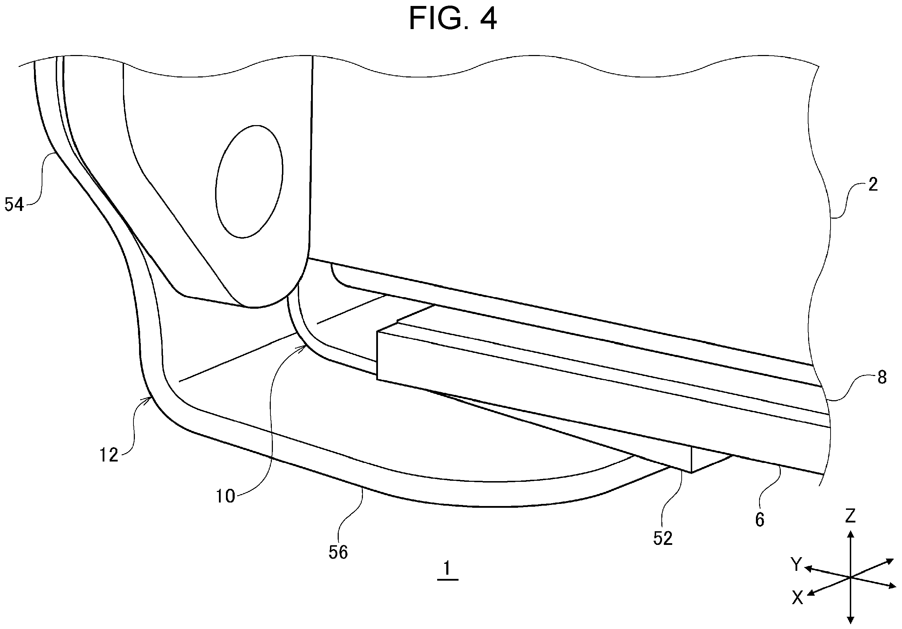

FIG. 3(A) is an enlarged cross-sectional view of an upper part of the battery module. FIG. 3(B) is an enlarged cross-sectional view of a bottom of the battery module. FIG. 4 is an enlarged perspective view of the bottom of the battery module. In FIG. 3(A), bus bar plate 28 and top cover 60 are not shown. Further, in FIGS. 3(A) and 3(B), the illustration of an internal structure of battery 14 is omitted. In FIG. 4, end plate 4 is not shown.

Restraint members 12 according to the present exemplary embodiment sandwich the plurality of batteries 14 in stacking direction X of batteries 14, and sandwich battery stack 2 and cooling plate 6 in arrangement direction Z of battery stack 2 and cooling plate 6. Specifically, restraint members 12 sandwich the plurality of batteries 14 in stacking direction X with both ends of flat surface 54 in stacking direction X of batteries 14 being engaged with the pair of end plates 4 (see FIGS. 1 and 2). Further, restraint members 12 sandwich battery stack 2, heat conductive layer 8, and cooling plate 6 with the pair of arms 56 in arrangement direction Z. That is, restraint members 12 have a function of fastening the plurality of batteries 14 and a function of fastening battery stack 2 and cooling plate 6. Therefore, unlike the conventional structure, battery stack 2 and cooling plate 6 are not fastened with screws.

First part 50 of each side separator 10 extends along the side surface of battery stack 2 in stacking direction X of batteries 14. Flat surface 54 of each restraint member 12 extends in stacking direction X of batteries 14 along the side surface of battery stack 2 outside of first part 50. Thus, first part 50 of each side separator 10 is interposed between the side surface of battery stack 2 and flat surface 54 of each restraint member 12. As a result, the side surface of each battery 14 and each restraint member 12 are electrically insulated.

Second part 52 of each side separator 10 abuts on a lower main surface of cooling plate 6, that is, the main surface opposite to battery stack 2. Arm 56 that protrudes from a lower end of flat surface 54 of restraint member 12 extends outside of second part 52 along the lower main surface of cooling plate 6. Therefore, second part 52 of each side separator 10 is interposed between cooling plate 6 and one arm 56 of the pair of arms 56 of each restraint member 12, that is, lower arm 56. As a result, cooling plate 6 and restraint members 12 are electrically insulated from each other.

Third part 53 of each side separator 10 abuts on the upper surface of battery stack 2. Arm 56 protruding from an upper end of flat surface 54 of each restraint member 12 extends outside of third part 53 along the upper surface of battery stack 2. Therefore, third part 53 of each side separator 10 is interposed between the upper surface of battery stack 2 and other arm 56 of the pair of arms 56 of each restraint member 12, that is, upper arm 56. As a result, the upper surface of each battery 14 and each restraint member 12 are electrically insulated.

Further, while battery stack 2, heat conductive layer 8, and cooling plate 6 are interposed between the pair of arms 56 in arrangement direction Z, heat conductive layer 8 is pressed by battery stack 2 and cooling plate 6 and is elastically deformed or plastically deformed. Thus, a thermal connection between battery stack 2 and cooling plate 6 can be obtained more reliably. Further, battery stack 2 as a whole can be uniformly cooled.

Third part 53 of each side separator 10 has folded part 64. Folded part 64 extends from a tip of third part 53 protruding toward battery stack 2 toward outside of battery module 1 in direction Y. A predetermined distance is provided between third part 53 and folded part 64 in arrangement direction Z, and upper arm 56 of restraint member 12 is inserted into a space between third part 53 and folded part 64. Therefore, a tip of upper arm 56 is wrapped with side separator 10.

As described above, battery module 1 according to the present exemplary embodiment includes battery stack 2 having the plurality of stacked batteries 14, cooling plate 6 thermally connected to battery stack 2, and restraint members 12 sandwiching the plurality of batteries 14 in stacking direction X of batteries 14 and sandwiching battery stack 2 and cooling plate 6 in arrangement direction Z of battery stack 2 and cooling plate 6. That is, in the present exemplary embodiment, restraint members 12 fasten the plurality of batteries 14 and fasten battery stack 2 and cooling plate 6. Therefore, battery stack 2 and cooling plate 6 are not fastened with screws.

As a result, battery module 1 can be structured more simply than in a case where battery stack 2 and cooling plate 6 are screwed together. Further, battery module 1 has less parts, and battery module 1 can be assembled more simply.

Battery module 1 includes the pair of end plates 4 disposed at both ends of battery stack 2 in stacking direction X of batteries 14. Further, each restraint member 12 has flat surface 54 extending in stacking direction X along battery stack 2 and the pair of arms 56 protruding from the end of flat surface 54 toward battery stack 2 and facing each other in arrangement direction Z. Then, restraint members 12 sandwich the plurality of batteries 14 with both ends of flat surface 54 in stacking direction X being engaged with the pair of end plates 4 and sandwich battery stack 2 and cooling plate 6 with the pair of arms 56. As a result, it is possible to fasten the plurality of batteries 14 and fasten battery stack 2 and cooling plate 6 with restraint members 12 having a simple structure.

Further, battery module 1 includes side separator 10. Side separator 10 has first part 50 extending in stacking direction X along battery stack 2 and interposed between battery stack 2 and flat surface 54 of restraint member 12, second part 52 protruding from first part 50 toward battery stack 2 and interposed between cooling plate 6 and one arm 56 of the pair of arms 56 of restraint member 12, and third part 53 protruding from first part 50 toward battery stack 2 and interposed between battery stack 2 and other arm 56 of the pair of arms 56 of restraint member 12. As a result, restraint members 12 and battery stack 2 can be electrically insulated, and restraint members 12 and cooling plate 6 can be electrically insulated.

Further, battery module 1 includes heat conductive layer 8 having insulation properties interposed between battery stack 2 and cooling plate 6. Thus, the cooling efficiency of batteries 14 can be increased, and batteries 14 can be uniformly cooled. The displacement of battery stack 2 and cooling plate 6 can be suppressed. Further, heat conductive layer 8 is pressed by battery stack 2 and cooling plate 6 to be elastically deformed or plastically deformed. As a result, the thermal connection between battery stack 2 and cooling plate 6 can be obtained more reliably, and battery stack 2 as a whole can be cooled uniformly. Furthermore, the displacement between battery stack 2 and cooling plate 6 can be further suppressed.

### (Second exemplary embodiment)

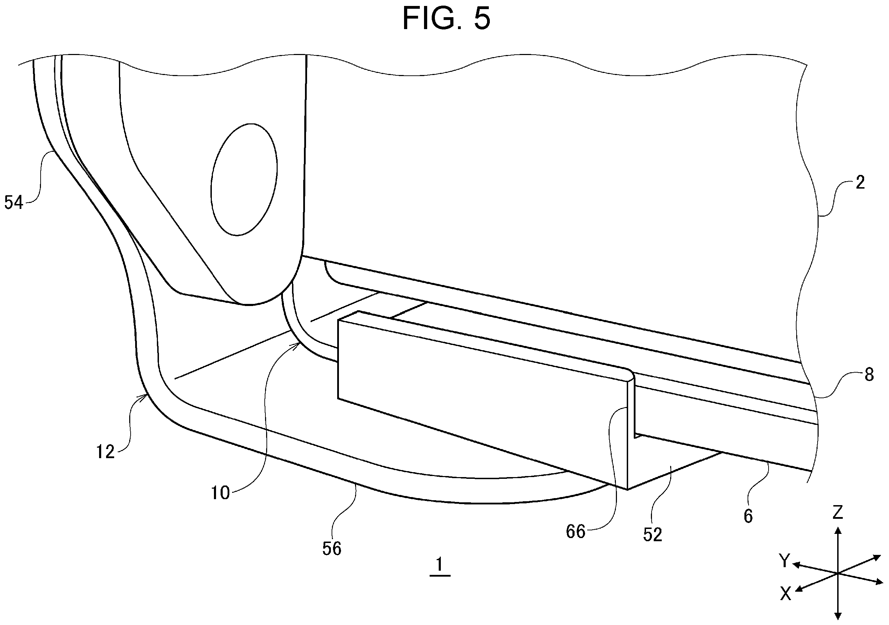

A battery module according to a second exemplary embodiment has the same configuration as the configuration of the first exemplary embodiment except for the shape of the side separators. Hereinafter, a configuration of the battery module according to the present exemplary embodiment that is different from that of the first exemplary embodiment will be mainly described, and the common configuration will be briefly described or not described. FIG. 5 is an enlarged perspective view of a bottom of the battery module according to the second exemplary embodiment. In FIG. 5, end plate 4 is not shown.

Battery module 1 according to the present exemplary embodiment includes battery stack 2, cooling plate 6 thermally connected to battery stack 2, and restraint members 12 that sandwich the plurality of batteries 14 in stacking direction X and sandwich battery stack 2 and cooling plate 6 in arrangement direction Z. Each restraint member 12 has flat surface 54 extending along the side surface of battery stack 2, and the pair of arms 56 protruding from the upper end and lower end of flat surface 54 toward battery stack 2. Both ends of flat surface 54 in stacking direction X are engaged with the pair of end plates 4 sandwiching battery stack 2 in stacking direction X. As a result, the plurality of batteries 14 is interposed in stacking direction X. Further, the pair of arms 56 sandwiches battery stack 2 and cooling plate 6 in arrangement direction Z. Battery stack 2 and cooling plate 6 are not fastened with screws.

Further, heat conductive layer 8 having insulation properties is interposed between battery stack 2 and cooling plate 6. Heat conductive layer 8 is pressed by battery stack 2 and cooling plate 6 to be elastically deformed or plastically deformed.

Further, battery module 1 includes the pair of side separators 10. Each side separator 10 has first part 50, second part 52, and third part 53. First part 50 extends in stacking direction X along battery stack 2 and is interposed between the side surface of battery stack 2 and flat surface 54 of restraint member 12. Second part 52 protrudes from a lower end of first part 50 toward battery stack 2, and is interposed between cooling plate 6 and lower arm 56 of restraint member 12. Third part 53 protrudes from an upper end of first part 50 toward battery stack 2, and is interposed between the upper surface of battery stack 2 and upper arm 56 of restraint member 12.

Second part 52 extends in stacking direction X of batteries 14. An end of second part 52 in stacking direction X is located further outside of battery module 1 as compared with cooling plate 6. Each side separator 10 has protrusion 66 that protrudes from the end of second part 52 in stacking direction X toward battery stack 2. Protrusions 66 are provided at both ends of each side separator 10 in stacking direction X. Thus, protrusions 66 are provided at the four corners of battery module 1.

A tip of each protrusion 66 is located closer to battery stack 2 than the main surface of cooling plate 6 opposite to battery stack 2. That is, when viewed from stacking direction X, each protrusion 66 partially overlaps with cooling plate 6. Each protrusion 66 more preferably protrudes to the main surface of cooling plate 6 on battery stack 2 side, and more preferably protrudes to heat conductive layer 8. Thus, cooling plate 6 is interposed between protrusions 66 in stacking direction X. Thus, the displacement of cooling plate 6 in stacking direction X can be suppressed. It is therefore possible to prevent cooling plate 6 from protruding from battery module 1 in stacking direction X.

The exemplary embodiments of the present invention have been described in detail above. The above exemplary embodiments merely show specific examples in implementing the present invention. The content of the exemplary embodiments does not limit the technical scope of the present invention, and many design changes such as modification, addition, and deletion of components can be made without departing from the spirit of the invention defined in the claims. The new exemplary embodiments with design changes have the effects of the combined exemplary embodiments and modifications. In the above exemplary embodiments, the contents that can be changed in design are emphasized by adding notations such as "according to the present exemplary embodiment" and "in the present exemplary embodiment". However, design changes are allowed for contents without such notations. Any combination of components included in each exemplary embodiment is also effective as an aspect of the present invention. Hatching attached to the cross sections in the drawings does not limit a material of the objects to which the hatching is attached.

The number of batteries 14 included in battery module 1 is not limited. The fastening structure between end plates 4 and restraint members 12 is not limited. Batteries 14 may have a cylindrical shape or the like. Side separators 10 may include a plurality of divided parts. If sufficient heat conduction and frictional force can be secured between battery stack 2 and cooling plate 6, heat conductive layer 8 may be omitted, and an insulating sheet including PET or PC may be interposed between battery stack 2 and cooling plate 6.

### REFERENCE MARKS IN THE DRAWINGS

- 1:: battery module
- 2:: battery stack
- 4:: end plate
- 6:: cooling plate
- 8:: heat conductive layer
- 10:: side separator
- 12:: restraint member
- 14:: battery
- 50:: first part
- 52:: second part
- 53:: third part
- 54:: flat surface
- 56:: arm
- 66:: protrusion

## Claims

1. A battery module comprising:
a battery stack having a plurality of batteries that are stacked;
a cooling plate thermally connected to the battery stack; and
a restraint member that sandwiches the plurality of batteries in a stacking direction of the batteries and sandwiches the battery stack and the cooling plate in an arrangement direction of the battery stack and the cooling plate.

2. The battery module according to claim 1 further comprising a pair of end plates disposed at both ends of the battery stack in the stacking direction,
wherein the restraint member includes a flat surface elongated in the stacking direction along the battery stack and a pair of arms protruding from an end of the flat surface toward the battery stack and facing each other in the arrangement direction, and
the restraint member sandwiches the plurality of batteries with both ends in the stacking direction of the flat surface being engaged with the pair of end plates and sandwiches the battery stack and the cooling plate with the pair of arms.

3. The battery module according to claim 2, further comprising a side separator,
wherein the side separator has
a first part elongated along the battery stack in the stacking direction and interposed between the battery stack and the flat surface of the restraint member,
a second part protruding from the first part toward the battery stack and interposed between the cooling plate and one arm of the pair of arms of the restraint member, and
a third part protruding from the first part toward the battery stack and interposed between the battery stack and other arm of the pair of arms of the restraint member.

4. The battery module according to claim 3,
wherein the second part is elongated in the stacking direction, and
the side separator has a protrusion protruding from an end of the second part in the stacking direction toward the battery stack.

5. The battery module according to any one of claim 1 to claim 4, further comprising a heat conductive layer having insulation properties interposed between the battery stack and the cooling plate.

6. The battery module according to claim 5, wherein the heat conductive layer is pressed by the battery stack and the cooling plate and then is elastically deformed or plastically deformed.

7. The battery module according to any one of claim 1 to claim 6, wherein the battery stack and the cooling plate are not fastened with a screw.
